**Europäisches Patentamt**

**European Patent Office**

**Office européen des brevets**

(11) Numéro de publication: **0 175 599**
**B1**

(19)

(12) **FASCICULE DE BREVET EUROPEEN**

(45) Date de publication du fascicule du brevet:
**07.01.88**

(21) Numéro de dépôt: **85401456.0**

(22) Date de dépôt: **16.07.85**

(51) Int. Cl.⁴: **F 02 K 1/60, F 02 K 1/76**

(54) Inverseur de poussée pour moteur à réaction.

(30) Priorité: **24.07.84 FR 8411732**

(43) Date de publication de la demande:
**26.03.86 Bulletin 86/13**

(45) Mention de la délivrance du brevet:
**07.01.88 Bulletin 88/1**

(84) Etats contractants désignés:
**DE GB**

(56) Documents cités:
**FR - A - 1 134 418**
**FR - A - 2 494 775**
**GB - A - 820 771**
**US - A - 3 532 275**
**US - A - 3 550 855**
**US - A - 3 576 337**
**US - A - 4 147 027**

(73) Titulaire: **SOCIETE DE CONSTRUCTION DES AVIONS HUREL-DUBOIS, 39 rue Grange Dame-Rose, F-92360 Meudon-la-Foret (FR)**

(72) Inventeur: **Kennedy, John Francis, 6, square du Pont de Sèvres, F-92100 Boulogne (FR)**
Inventeur: **Fournier, Alain, 34, rue Pierre Corby, F-92140 Clamart (FR)**

(74) Mandataire: **Sauvage, Renée, Cabinet Sauvage 100 bis, avenue de Saint-Mandé, F-75012 Paris (FR)**

**Description**

La présente invention concerne un inverseur de poussée du type dit «à portes» pour moteur à réaction, notamment destiné à équiper un avion. Elle concerne plus spécifiquement un agencement du système de manoeuvre des portes.

On connaît notamment par le brevet US-A-4 147 027 des inverseurs de poussée à portes présentant un arrière-corps à canal interne pour l'evacuation des gaz et deux portes articulées respectivement autour de pivots portés par deux poutres solidaires de l'arrière-corps et diamètralement opposées, un système de manoeuvre unique assurant l'ouverture et la fermeture des portes. Un tel système de manoeuvre est constitué par un vérin asservi à deux bielles attaquant respectivement chacune des portes.

Toutefois, l'agencement du système de manoeuvre du brevet ci-dessus présente un certain nombre d'inconvénients pouvant avoir une répercussion sur la fiabilité et la durée de vie du système. En effet, en premier lieu ce système prévoit l'utilisation de bielles de grande longueur présentant un débattement latéral important qui risque d'entraîner un flambage des bielles. En second lieu, dans cet agencement connu, l'ensemble des efforts de manoeuvre est supporté directement par le vérin; le vérin assure donc à lui seul outre sa fonction génératrice d'effort de poussée, les fonctions de guidage des bielles et de transmission à la poutre des efforts de réaction des portes. En troisième lieu, cet agencement oblige les bielles à être directement au contact du flux de gaz chaud s'échappant du moteur lorsque les portes sont déployées.

La présente invention propose un perfectionnement à l'agencement ci-dessus permettant d'éliminer les inconvénients cités tout en réalisant un système plus compact, protégé contre les risques d'endommagement et mécaniquement plus sûr.

Selon l'invention, l'inverseur se caractérise par le fait que l'une des poutres constitue un caisson totalement fermé, isolant le mécanisme de commande de l'influence du jet chaud des gaz d'échappement, l'ensemble de ce mécanisme étant logé dans le caisson et présentant entre le vérin et les bielles une pièce de transmission assurant un faible débattement des bielles lors de leur déplacement. Le caisson présente du côté du canal d'évacuation des gaz une face arrière constituée par la paroi du canal interne, deux longerons latéraux s'étendant parallèlement à l'axe du moteur; une face avant constituée par un capot arrondi et une traverse reliant les deux ferrures latérales dans la zone d'articulation des portes, ladite traverse présentant seulement deux ouvertures pour le passage des bielles, la base du caisson étant constituée par un épaulement de l'arrière-corps joignant sa paroi extérieure au canal interne.

Pour isoler les extrémités des bielles attelées aux portes de l'influence du flux chaud, la face arrière du caisson est prolongée au-delà de la traverse par un flasque.

Le vérin est situé à la base du caisson, à l'opposé des bielles par rapport à la pièce de transmission, ce qui permet d'utiliser un vérin compact.

La pièce de transmission est constituée par un corps rigide suspendu de façon pivotante par deux oreilles articulées sur des axes solidaires des ferrures latérales de la poutre, le corps comportant par ailleurs une chape médiane dans laquelle s'articule la tête du vérin et deux chapes latérales pour l'articulation des pieds de bielle. Les chapes médiane et latérale sont situées à l'opposé des oreilles par rapport au corps. De cette manière, les efforts mécaniques supportés par les bielles sont transmis directement à la poutre par l'intermédiaire du corps, ce qui évite d'utiliser un vérin surdimensionné comme dans le cas du brevet US-A-4 147 027.

De préférence, les oreilles de suspension du corps sont situées dans la même zone que les chapes d'attelage des pieds de bielles, alors que la chape dans laquelle s'articule le vérin est située au milieu du corps.

D'autres caractéristiques de l'invention apparaîtront dans le cours de la description d'une forme préférée de réalisation en référence aux dessins annexés dans lesquels:

la figure 1 est une vue en perspective d'un inverseur selon l'invention;

la figure 2 est une coupe selon ligne II-II de la figure 1;

la figure 3 est une vue de face à plus grande échelle du mécanisme de manoeuvre des portes; et

la figure 4 est une coupe selon la ligne IV-IV de la figure 3.

Dans les dessins, on n'a représenté que la partie arrière d'un moteur à réaction d'avion à double flux dont l'axe est indiqué en X. En 1, on a représenté l'arrière-corps du moteur et en 2 l'extension du canal d'éjection centré sur l'axe X.

Les flèches F montrent le sens d'écoulement des gaz brûlés provenant du moteur et du flux d'air du ventilateur (non représentés). Deux poutres diamètralement opposées désignées respectivement par les références 3 et 4 s'étendent dans le prolongement de l'arrière-corps 1 dont elles sont solidaires. A l'extrémité aval des poutres sont articulées autour de pivots 14-14 deux portes 5 et 6 de l'inverseur de poussée.

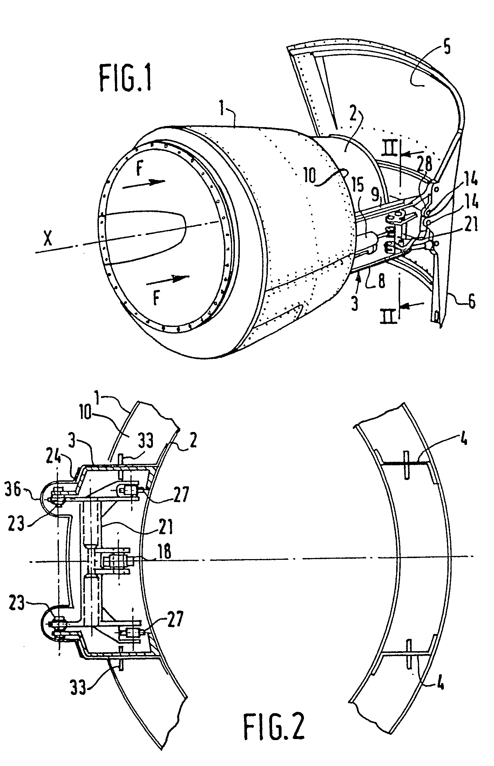

En position de croisière, ces portes sont escamotées dans l'alignement de l'arrière-corps et laissent s'écouler librement le flux de gaz. En position d'inversion de poussée, elles basculent dans la position déployée représentée à la figure 1 en venant en butée l'une contre l'autre de façon à bloquer le jet de gaz et à le dévier latéralement par les ouvertures qu'elles dégagent en aval de l'extension 2 du ventilateur. Dans la forme de réalisation représentée, la paroi externe de l'arrière-corps 1 est excentrée par rapport à l'axe X du moteur parce que l'on a adapté l'invention à un type d'avion particulier, mais on comprendra que l'invention s'applique tout aussi bien au cas d'arrière-corps à parois concentriques.

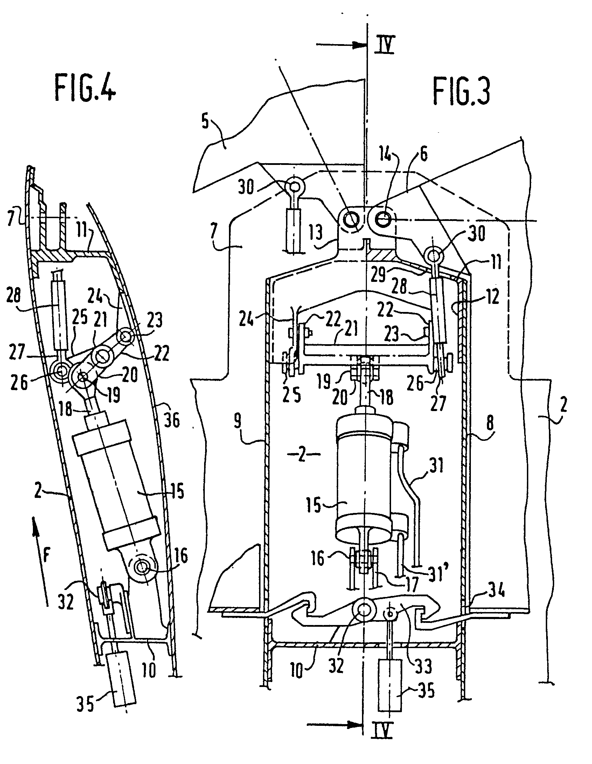

Le mécanisme de manoeuvre des portes est aménagé dans la poutre 3 que l'on décrira à présent de façon plus détaillée en référence aux figures 3 et 4.

Dans le prolongement de la paroi de l'extension 2 du ventilateur est prévu un flasque 7 qui s'étend vers l'aval, au-delà de la poutre proprement dite et qui permet d'isoler celle-ci du jet de gaz.

La poutre 3 a la forme d'un caisson fermé dont le fond est constitué par la paroi 2 et par le flasque 7, dont les parois latérales sont formées par deux longerons 8 et 9 fixés à leur base sur l'épaulement 10 reliant la paroi externe 1 de l'arrière-corps à l'extension 2 du canal du ventilateur. Les longerons 8 et 9 s'étendent parallèlement à l'axe X et sont solidarisés à leur extrémité aval par une traverse 11 en forme générale de U renversé dont les bras 12 sont rigidement liés aux longerons 8 et 9. Dans une chape centrale 13 de la traverse sont articulées autour des pivots 14 les portes 5 et 6.

Un vérin 15 articulé en 16 dans un support 17 fixé à la base du caisson s'étend en direction de la traverse 11 et sa tige 18 s'articule en 19 dans une chape médiane 20 solidaire d'une pièce de transmission 21 présentant deux oreilles d'extrémité 22 articulées sur des axes de pivotement 23 portés par des pattes fixes 24 solidaires de chacun des longerons 8 - 9. Le corps de transmission 21 est ainsi suspendu de façon pivotante sur des axes 23 de telle manière que les efforts mécaniques soient transmis aux longerons de la poutre 3.

Aux extrémités de la pièce 21 sont également prévues deux chapes 25 situées à l'opposé des oreilles 23 et dans lesquelles viennent s'articuler autour d'axes 26 les pieds 27 de deux bielles 28 qui s'étendent au-delà de la traverse 11 dans laquelle sont ménagées des ouvertures appropriées 29 équipées de joints d'étanchéité (non représentés). Les têtes des bielles 28 s'articulent respectivement en 30 à chacune des portes 5 - 6 dans une zone écartée du pivot 14. Naturellement, les bielles peuvent être réglées en longueur, mais une fois réglées elles sont totalement indéformables et transmettent aux portes la poussée du vérin 15 de manoeuvre dont on a représenté en 31 et 31' les tuyaux d'alimentation en fluide hydraulique.

Comme on le voit particulièrement à la figure 4, la chape médiane 20 est également située à l'opposé des oreilles 22 par rapport au corps 21. Dans cette disjonction, les chapes 20 et 25 sont situées au voisinage de la paroi 2. Par ailleurs, les axes 26 d'articulation des bielles sont plus éloignés de l'axe 23 de pivotement du corps 21 que l'axe 19 d'articulation du vérin.

Ainsi, l'ensemble du mécanisme de manoeuvre des portes d'inverseur se trouve à l'abri du jet chaud et les pièces mobiles relativement fragiles sont protégées contre les risques d'endommagement.

Pour fermer le caisson du côté extérieur, on a prévu un capot 36 amovible qui permet un accès aisé au mécanisme, ce capot se trouvant dans le prolongement de la paroi extérieure de l'arrière-corps.

Par ailleurs, on peut également monter à l'intérieur du caisson les verrous 33 de maintien des portes en position escamotée, chaque verrou étant constitué par un crochet en forme de S articulé en 32 à la structure fixe et actionné par un vérin de verrou 35 logé dans le caisson. L'extrémité des crochets destinée à coopérer avec la porte s'étend hors du caisson à travers une fenêtre 34 pratiquée dans le longeron 8 - 9.

## Revendications

1. Inverseur de poussée à portes pour moteur à réaction présentant un arrière-corps (1) à canal interne pour l'évacuation des gaz et deux portes (5, 6) articulées respectivement autour de pivots (14) portés par deux poutres (3, 4) diamètralement opposées solidaires de l'arrière-corps (1), un dispositif de manoeuvre unique assurant l'ouverture et la fermeture des portes (5, 6) et étant constitué par un vérin (15) attelé à deux bielles (28) attaquant respectivment chacune des portes (5, 6), caractérisé en ce que:

— une des poutres (3) constitue un caisson totalement fermé et présente: du côté du canal d'évacuation des gaz, une face arrière constituée par la paroi du canal interne (2); deux longerons latéraux (8, 9) s'étendant parallèlement à l'axe du moteur (X); une face avant constituée par un capot amovible (36); une traverse (11) reliant les deux longerons latéraux (8, 9) dans la zone d'articulation des portes (5, 6), ladite traverse (11) présentant seulement deux ouvertures (29) pour le passage des deux bielles (28); la base du caisson étant constituée par un épaulement (10) de l'arrière-corps joignant la paroi extérieure de ce dernier au canal interne (2);

— et l'ensemble du dispositif de manoeuvre, qui présente entre le vérin (15) et les bielles (28) une pièce (21) de transmission assurant un faible débattement latéral des bielles lors de leur déplacement, est logé à l'intérieur dudit caisson qui le protège contre les risques d'endommagement.

2. Inverseur selon la revendication 1, caractérisé en ce que la face arrière du caisson est prolongée au-delà de la traverse par un flasque (7) isolant l'extrémité des bielles articulées aux portes du flux de gaz brûlés s'échappant du moteur.

3. Inverseur selon la revendication 1, caractérisé en ce que la pièce de transmission (21) est constituée par un corps suspendu de façon pivotante par deux oreilles (22) articulées sur des pivots (23) solidaires des longerons latéraux (8 - 9) de la poutre, le corps comportant une chape médiane (20) dans laquelle s'articule la tête du vérin (15) et deux chapes latérales (25) pour l'articulation des pieds de bielles (28), les chapes médiane et latérales étant situées à l'opposé des oreilles par rapport au corps (21).

4. Inverseur selon la revendication 3, caractérisé en ce que la distance entre l'axe (23) de pivotement du corps (21) et l'articulation (19) de la tête du vérin (15) du corps est inférieure à la distance entre l'axe (23) de pivotement du corps et les articulations (26) des bielles au corps.

5. Inverseur selon l'une quelconque des revendications 3 ou 4, caractérisé en ce que les chapes d'articulation du vérin et des bielles au corps sont situées au voisinage de la face arrière (2) du caisson constituée par la paroi du canal interne.

6. Inverseur selon l'une quelconque des revendications 1 à 5, caractérisé en ce que les ouvertures (29) pratiquées dans la traverse pour le passage des bielles sont équipées de joints d'étanchéité isolant l'intérieur du caisson de l'environnement extérieur.

7. Inverseur selon l'un quelconque des revendications précédentes dans lequel les portes (5 - 6) sont retenues en position inactive par des verrous (33) caractérisé en ce que lesdits verrous sont logés dans le caisson.

**Patentansprüche**

1. Schubumkehrvorrichtung mit Klappen für ein Rückstosstriebwerk, enthaltend einen Hinterkörper (1) mit einem inneren Kanal zum Ausstoss von Gasen und zwei Klappen, die jeweils um Schwenkachsen (14) gelenkig gelagert sind, die von zwei diametral gegenüberliegenden Trägern gehalten sind, die mit dem Hinterkörper (1) fest verbunden sind, und eine einzige Stellvorrichtung, die das Öffnen und Schliessen der Klappen (5, 6) sicherstellt und von einem Zylinder gebildet ist, der mit zwei Lenkern (28) verbunden ist, die an jeweils einer der Klappen (5, 6) angreifen, dadurch gekennzeichnet, dass die Träger (3) ein vollständig geschlossenes Gehäuse bilden, das aufweist: seitlich des Gasausstosskanals eine Hinterseite, die von der Wand des inneren Kanals (2) gebildet wird, zwei Längsträger (8, 9), die sich parallel zur Achse (X) des Triebwerks erstrecken, eine Vorderseite, die von einem beweglichen Deckel (36) gebildet ist, einen Querträger (11), der die zwei Längsträger (8, 9) im Bereich der Anlenkung der Klappen (5, 6) verbindet, wobei der Querträger (11) nur zwei Öffnungen (29) für den Durchtritt der zwei Lenker (28) aufweist, wobei die Basis des Gehäuses von einer Schulter (10) des Hinterkörpers gebildet ist, die an der Aussenwand des genannten inneren Kanals (2) befestigt ist; und dass die Stellvorrichtung, die zwischen dem Zylinder (15) und den Lenkern (28) ein Übertragungsteil (21) aufweist, das einen leichten Querversatz der Lenker bei ihrer Bewegung sicherstellt, im Innern des genannten Gehäuses angeordnet ist, das sie gegen Beschädigungsgefahren schützt.

2. Schubumkehrer nach Anspruch 1, dadurch gekennzeichnet, dass die Hinterseite des Gehäuses über den Querträger hinaus durch einen Flansch (7) verlängert ist, der das Ende der an den Klappen angelenkten Lenker gegenüber der Abgasströmung schützt, die aus dem Triebwerk austritt.

3. Schubumkehrer nach Anspruch 1, dadurch gekennzeichnet, dass das Übertragungsteil (21) von einem Körper gebildet ist, der schwenkbar von zwei Armen (22) gehalten ist, die auf Schwenklagern (23) gelagert sind, die an den Längsträgern (8, 9) des Trägers fest angebracht sind, wobei der Körper ein mittleres Gelenkstück (20) aufweist, an dem der Kopf des Zylinders (15) angelenkt ist, und zwei seitliche Gelenkstücke (25) für die Anlenkung der Füsse der Lenker (28), wobei das mittlere und die seitlichen Gelenkstücke auf den abgewandten Seiten der Arme in bezug auf den Körper (21) gelegen sind.

4. Schubumkehrer nach Anspruch 3, dadurch gekennzeichnet, dass der Abstand zwischen der Schwenkachse (23) des Körpers (21) und der Anlenkung (19) des Kopfes des Zylinders (15) am Körper kleiner als die Distanz zwischen der Schwenkachse (23) des Körpers und den Anlenkungen (26) der Lenker an dem Körper ist.

5. Schubumkehrer nach einem der Ansprüche 3 oder 4, dadurch gekennzeichnet, dass die Gelenkstücke für die Anlenkung des Zylinders und der Lenker am Körper benachbart der Hinterseite (2) des Gehäuses gelegen sind, die von der Wand des inneren Kanals gebildet wird.

6. Schubumkehrer nach einem der Ansprüche 1 bis 5, dadurch gekennzeichnet, dass die Öffnungen (29), die in dem Querträger für den Hindurchtritt der Lenker ausgebildet sind, mit Dichtungen versehen sind, die das Innere des Gehäuses von der äusseren Umgebung isolieren.

7. Schubumkehrer nach einem der vorhergehenden Ansprüche, bei dem die Klappen (5, 6) in ihrer inaktiven Stellung von Riegeln (33) gehalten werden, dadurch gekennzeichnet, dass die genannten Riegel in dem Gehäuse angeordnet sind.

**Claims**

1. A door thrust reverser for a jet engine having a rear body (1) with an internal channel for removing the gases and two doors (5, 6) hinged respectively about pivots (14) fixed to two diametrically opposite beams (3, 4) secured to the rear body (1), a single operating device providing the opening and closure of the doors (5, 6) and being formed by an actuating cylinder (15) coupled to two links (28) driving respectively each of the doors (5, 6), characterized in that:

— one of the beams (3) forms a totally closed caisson and has: on the gas discharge channel side, a rear face formed by the wall of the internal channel (2); two side members (8, 9) extending parallel to the axis of the motor (X); a front face formed by a removable cover (36); a cross piece (11) connecting the two side members (8, 9) together in the pivoting zone of the doors (5, 6); said cross piece (11) having only two apertures (29) for passing the two links (28) therethrough; the base of the caisson being formed by a shoulder (10) of the rear body joining the outer wall of this latter to the internal channel (2);

— and the whole of the operating device which comprises between the actuating cylinder (15) and the links (28) a transmission piece (21) ensuring a small lateral deflection of the links during movement thereof is housed inside said caisson which protects it against the risks of damage.

2. Reverser according to claim 1, characterized in that the rear face of the caisson is extended beyond the cross piece by a flange (7) isolating the end of the links hingedly fixed to the doors from the flow of burnt gases escaping from the engine.

3. Reverser according to claim 1, characterized in that the transmission piece (21) is formed by a body pivotably suspended by two lugs (22) hingedly mounted on pivots (23) fixed to the side members (8, 9) of the beam, the body comprising a median fork joint (20) in which is pivotably mounted the head of the actuating cylinder (15) and two lateral fork joints (25) for pivotably mounting the feet of links (28), the median and lateral fork joints being situated opposite the lugs with respect to the body (21).

4. Reverser according to claim 3, characterized in that the distance between the pivot pin (23) of the body (21) and the pivot pin (19) of the head of the actuating cylinder (15) of the body is less than the distance between the pivot pin (23) of the body and the points (26) where the links are pivoted to the body.

5. Reverser according to any one of claims 3 or 4, characterized in that the fork joints for pivotably securing the actuating cylinder and the links to the body are situated in the vicinity of the rear face (2) of the caisson formed by the wall of the internal channel.

6. Reverser according to any one of claims 1 to 5, characterized in that the openings (29) formed in the cross piece for passing the links therethrough are equipped with seals isolating the inside of the caisson from the outside environment.

7. Reverser according to any one of the preceding claims, in which the doors (5, 6) are held in an inactive position by bolts (33), characterized in that said bolts are housed in the caisson.

FIG.1

FIG.2

FIG.4

FIG.3